# EUROPEAN PATENT APPLICATION

(11) **EP 4 617 967 A1**
(43) Date of publication of application: **17.09.2025**
(21) Application number: 25162048.0
(22) Date of filing: 06.03.2025
(51) Int. Cl.: G06Q 10/0631

(54) **MANAGEMENT SERVER, ROBOT MANAGEMENT SYSTEM, AND ROBOT MANAGEMENT METHOD**

(30) Priority: 13.03.2024 JP 2024039406
(71) Applicant: Yokogawa Electric Corporation, Tokyo 180-8750 (JP)
(72) Inventor: SAKURAI, Yasuki, Musashino-shi, Tokyo, 180-8750, (JP); SUGAWARA, Hiroki, Musashino-shi, Tokyo, 180-8750, (JP); MURAKAMI, Masashi, Musashino-shi, Tokyo, 180-8750, (JP); TANIGAWA, Youhei, Musashino-shi, Tokyo, 180-8750, (JP)
(74) Representative: Winter, Brandl - Partnerschaft mbB

(57) **Abstract**

A management server (10) includes a robot adapter module (13), and manages a first robot (20-1), a second robot (20-2),..., and an N-th robot (20-N) including robots having different models. The robot adapter module (13) converts work information data of inspection work into a command in a specific format corresponding to each model of the first robot (20-1), the second robot (20-2),..., and the N-th robot (20-N), and transmits the converted command into the specific format corresponding to the model of the robot that performs the inspection work to the robot that performs the inspection work among the first robot (20-1), the second robot (20-2),..., and the N-th robot (20-N).

## Description

### FIELD

The present disclosure relates to a management server, a robot management system, and a robot management method.

### BACKGROUND

In plants, robots have been utilized to solve manpower shortage and improve safety. For example, a patrol inspection in a plant can be performed by a robot instead of a human.

Example of related-art is described in Japanese Laid-open Patent Publication No. 2007-249801.

In a case where there is a plurality of robots that performs inspection work in a plant, there is a possibility that a plurality of robots having different models is mixed. The plurality of robots having different models may have different systems for managing the robots. In addition, an application programming interface (API) that connects a plurality of systems that manages robots having different models is hardly provided.

It has been therefore difficult to transfer inspection work between a plurality of robots having different models.

### SUMMARY

According to an aspect of an embodiment, a management server manages a plurality of robots including robots having models different from each other, the management server includes an adapter. The adapter converts work information data of inspection work into a command in a specific format corresponding to each of the models of the plurality of robots, and transmits the command after conversion into the specific format corresponding to the model of the robot that performs the inspection work to the robot that performs the inspection work among the plurality of robots.

### BRIEF DESCRIPTION OF THE DRAWINGS

FIG. 1 is a diagram illustrating a configuration example of a robot management system according to a first embodiment of the present disclosure;
FIG. 2 is a diagram illustrating a configuration example of a management server according to the first embodiment of the present disclosure;
FIG. 3 is a diagram illustrating an example of inspection information according to the first embodiment of the present disclosure;
FIG. 4 is a diagram illustrating an example of robot information according to the first embodiment of the present disclosure;
FIG. 5 is a diagram illustrating an example a processing procedure of the robot management system according to the first embodiment of the present disclosure;
FIG. 6 is a diagram illustrating an example of an operation of the robot management system according to the first embodiment of the present disclosure;
FIG. 7 is a diagram illustrating an example of the operation of the robot management system according to the first embodiment of the present disclosure;
FIG. 8 is a diagram illustrating an example of an operation of the robot management system according to the first embodiment of the present disclosure; and
FIG. 9 is a diagram illustrating an example of the operation of the robot management system according to the first embodiment of the present disclosure.

### DESCRIPTION OF EMBODIMENTS

Hereinafter, embodiments of the present disclosure will be described with reference to the drawings.

In the following embodiments, the same parts or the same processing are denoted by the same reference numerals, and redundant description may be omitted.

### First embodiment

### Configuration of robot management system

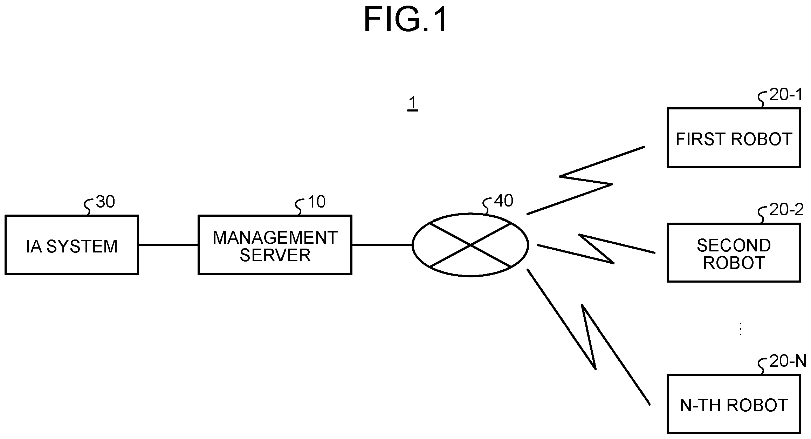

FIG. 1 is a diagram illustrating a configuration example of a robot management system according to a first embodiment of the present disclosure. In FIG. 1, a robot management system 1 includes a management server 10, a first robot 20-1, a second robot 20-2,..., and an N-th robot 20-N as a plurality of robots, and an industrial automation (IA) system 30. The management server 10 is connected to each of the first robot 20-1, the second robot 20-2,..., and the N-th robot 20-N via a network 40, and the management server 10 manages each of the first robot 20-1, the second robot 20-2,..., and the N-th robot 20-N movable in a plant by communication via the network 40. An example of the network 40 is a local area network (LAN). Hereinafter, the first robot 20-1, the second robot 20-2,..., and the N-th robot 20-N may be collectively referred to as a "robot 20". The number of robots 20 connected to the management server 10 is not limited. The first robot 20-1, the second robot 20-2,..., and the N-th robot 20-N include a plurality of robots 20 in which both manufacturers and models are different or either the manufacturers or the models are different. Some of the first robot 20-1, the second robot 20-2,..., and the N-th robot 20-N may include robots of the same manufacturer or the same model.

### Configuration of management server

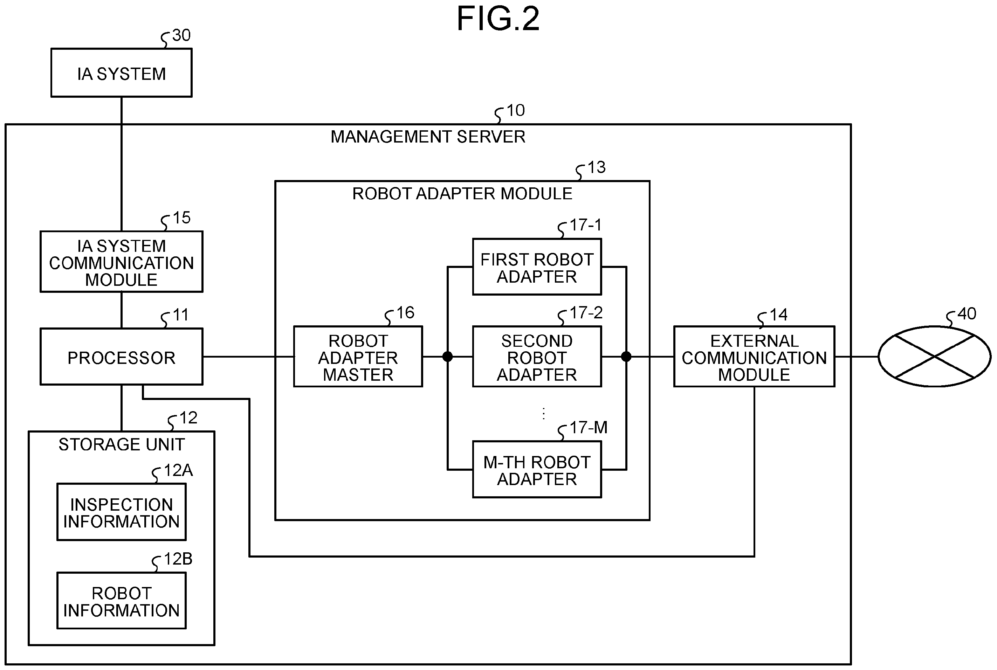

FIG. 2 is a diagram illustrating a configuration example of the management server according to the first embodiment of the present disclosure. In FIG. 2, the management server 10 includes a processor 11, a storage unit 12, a robot adapter module 13, an external communication module 14, and an IA system communication module 15. The external communication module 14 is connected to the network 40, and the robot adapter module 13 is communicable with the robot 20 via the network 40 by using the external communication module 14. The IA system communication module 15 is connected to the IA system 30, and the processor 11 is communicable with the IA system 30 by using the IA system communication module 15. Examples of the processor 11 include a central processing unit (CPU) and a digital signal processor (DSP). Examples of the storage unit 12 include a storage and a memory.

The storage unit 12 stores inspection information 12A and robot information 12B.

The robot adapter module 13 includes a robot adapter master 16, a first robot adapter 17-1, a second robot adapter 17-2,..., and an M-th robot adapter 17-M (where M<N). Each of the first robot adapter 17-1, the second robot adapter 17-2,..., and the M-th robot adapter 17-M is prepared for each manufacturer and each model of the robot 20. Hereinafter, the first robot adapter 17-1, the second robot adapter 17-2,..., and the M-th robot adapter 17-M may be collectively referred to as a "robot adapter 17".

### Inspection information

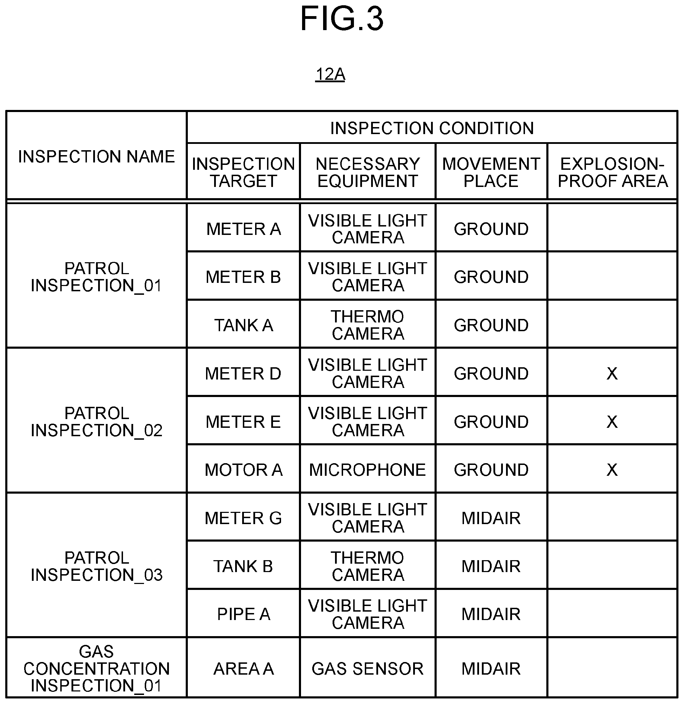

FIG. 3 is a diagram illustrating an example of the inspection information according to the first embodiment of the present disclosure. As illustrated in FIG. 3, an inspection name and an inspection condition are set in association with each other in the inspection information 12A. The inspection condition includes items of an inspection target, necessary equipment, a movement form, and an explosion-proof area.

For example, an inspection work having an inspection name of "patrol inspection_01" is associated with, as inspection conditions, conditions that inspection targets in the patrol inspection_01 are "meter A", "meter B", and "tank A", that an equipment of the robot necessary for inspecting "meter A" and "meter B" is a "visible light camera", that an equipment of a robot necessary for inspecting "tank A" is a "thermo camera", that a movement place of the robot in the patrol inspection_01 is "ground", and that an area in which "meter A", "meter B", and "tank A" exist is an area in which explosion prevention is unnecessary. Here, explosion prevention is to prevent fire and explosion at a place where a combustible substance exists.

For example, an inspection work having an inspection name of "patrol inspection_02" is associated with, as inspection conditions, conditions that inspection targets in the patrol inspection_02 are "meter D", "meter E", and "motor A", that an equipment of the robot necessary for inspecting "meter D" and "meter E" is a "visible light camera", that an equipment of the robot necessary for inspecting "motor A" is a "microphone", that a movement place of the robot in the patrol inspection_02 is "ground", and that an area in which "meter D", "meter E", and "motor A" exist is an area in which explosion prevention is necessary.

For example, an inspection work having an inspection name of "patrol inspection _03" is associated with, as inspection conditions, conditions that inspection targets in the patrol inspection _03 are "meter G", "tank B", and "pipe A", that an equipment of the robot necessary for inspecting "meter G" and "pipe A" is a "visible light camera", that an equipment of the robot necessary for inspecting "tank B" is a "thermo camera", that a movement place of the robot in the patrol inspection_03 is "midair", and that an area where "meter G", "tank B", and "pipe A" exist is an area in which explosion prevention is unnecessary.

For example, an inspection work having an inspection name of "gas concentration inspection_01" is associated with, as inspection conditions, conditions that an inspection target is "area A", that an equipment of the robot necessary for inspecting a gas concentration in "area A" is "gas sensor", that a movement place of the robot in the gas concentration inspection_01 is "midair", and that "area A" is an area in which explosion prevention is unnecessary.

Here, all of the meter A, the meter B, the tank A, the meter D, the meter E, the motor A, the meter G, the tank B, the pipe A, and the area A, which are inspection targets described above, exist in the plant where the robot 20 can move.

### Robot information

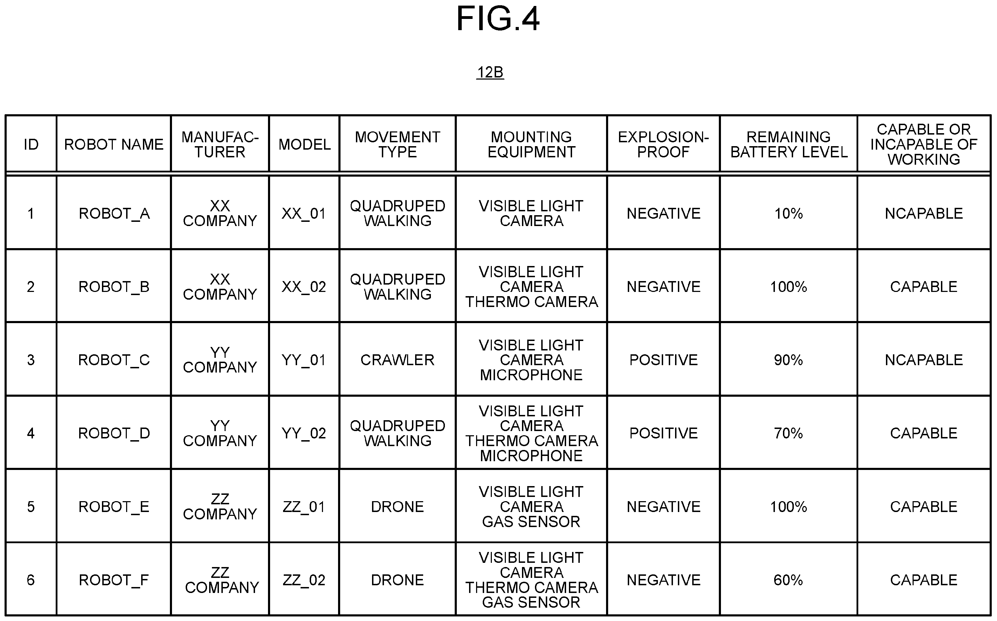

FIG. 4 is a diagram illustrating an example of the robot information according to the first embodiment of the present disclosure. As illustrated in FIG. 4, in robot information 12B, an ID of a robot, a robot name, a manufacturer of the robot, a model of the robot, a movement type of the robot, mounting equipment of the robot, whether the robot is explosion-proof, a remaining battery level of the robot, and a state of whether the robot is capable or incapable of working are set in association with each other. For example, due to a failure of the robot or the like, there is a case where the robot is incapable of working even if the remaining battery level is sufficient. The remaining battery level and whether capable or incapable of working indicated in the robot information 12B are updated at a constant cycle by the processor 11 in accordance with data indicating a current state of the robot 20 (hereinafter, sometimes referred to as "robot current state data"). The robot current state data is transmitted from the robot 20 at a constant cycle.

For example, it can be seen from the robot information 12B that, as for the robot having the ID of "1" and the robot name of "robot_A", the manufacturer is "XX company", the model is "XX_01", the movement type is "quadruped walking", the mounting equipment is "visible light camera", whether the robot is explosion-proof is "negative", the remaining battery level is "10%", and whether capable or incapable of working is "incapable".

For example, it can be seen from the robot information 12B that, as for the robot having the ID of "2" and the robot name of "robot_B", the manufacturer is "XX company", the model is "XX_02", the movement type is "quadruped walking", the mounting equipment is "visible light camera" and "thermo camera", whether the robot is explosion-proof is "negative", the remaining battery level is "100%", and whether capable or incapable of working is "capable".

For example, it can be seen from the robot information 12B that, as for the robot having the ID of "3" and the robot name of "robot_C", the manufacturer is "YY company", the model is "YY_01", the movement type is "crawler", the mounting equipment is "visible light camera" and "microphone", whether the robot is explosion-proof is "positive", the remaining battery level is "90%", and whether capable or incapable of working is "incapable". Here, the crawler is, for example, a robot having a suspension that can be used even on an uneven ground called an infinite track.

For example, it can be seen from the robot information 12B that, as for the robot having the ID of "4" and the robot name of "robot_D", the manufacturer is "YY company", the model is "YY_02", the movement type is "quadruped walking", the mounting equipment is "visible light camera" and "thermo camera" and "microphone", whether the robot is explosion-proof is "positive", the remaining battery level is "70%", and whether capable or incapable of working is "capable".

For example, it can be seen from the robot information 12B that, as for the robot having the ID of "5" and the robot name of "robot_E", the manufacturer is "ZZ company", the model is "ZZ_01", the movement type is "drone", the mounting equipment is "visible light camera" and "gas sensor", whether the robot is explosion-proof is "negative", the remaining battery level is "100%", and whether capable or incapable of working is "capable".

For example, it can be seen from the robot information 12B that, as for the robot having the ID of "6" and the robot name of "robot _F", the manufacturer is "ZZ company", the model is "ZZ_02", the movement type is "drone", the mounting equipment is "visible light camera", "thermo camera", and "gas sensor", whether the robot is explosion-proof is "negative", the remaining battery level is "60%", and whether capable or incapable of working is "capable".

### Operation of robot management system

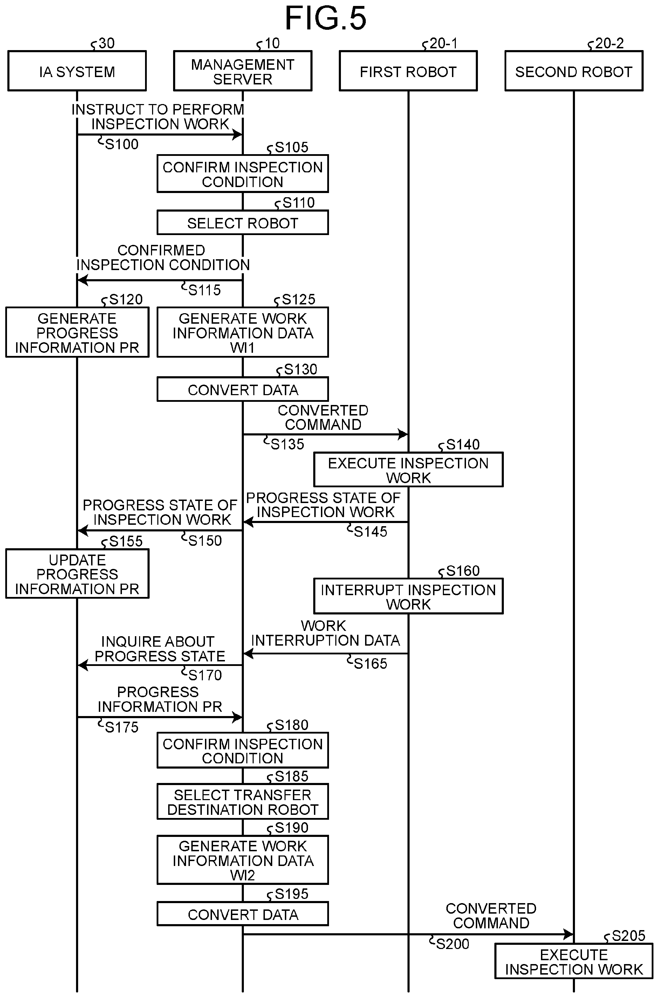

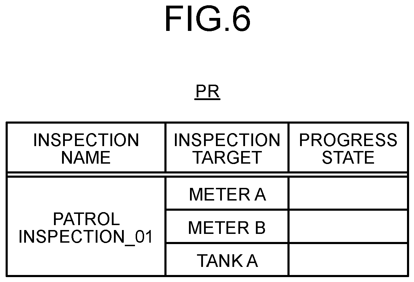

FIG. 5 is a diagram illustrating an example a processing procedure of the robot management system according to the first embodiment of the present disclosure. FIG. 6, 7, 8, and 9 are diagrams illustrating an operation example of the robot management system according to the first embodiment of the present disclosure.

In FIG. 5, for example, when the management server 10 is instructed by the IA system 30 to perform an inspection work having an inspection name of "patrol inspection_01" (step S100), the processor 11 of the management server 10 confirms an inspection condition necessary for performing the inspection work of "patrol inspection_01" by referring to the inspection information 12A on the basis of the inspection name of "patrol inspection_01" (step S105).

In the inspection information 12A illustrated in FIG. 3, the processor 11 confirms the inspection condition that the inspection targets of "patrol inspection_01" are "meter A", "meter B", and "tank A". In the inspection information 12A illustrated in FIG. 3, the processor 11 confirms the inspection conditions that an equipment necessary for performing the "patrol inspection_01" are "visible light camera" and "thermo camera", a movement place in the "patrol inspection_01" is "ground", and an area in which the inspection work of the "patrol inspection_01" is performed is the area in which explosion prevention is unnecessary.

Next, by referring to the robot information 12B on the basis of the inspection condition (which may be hereinafter referred to as a "confirmed inspection condition") that has been confirmed by using the inspection information 12A, the processor 11 selects a robot that satisfies the confirmed inspection condition in the robot information 12B (step S110). In the robot information 12B, the robots that have "visible light camera" and "thermo camera" as a mounting equipment, is "capable" as to whether capable or incapable of working, and can move on the ground are "robot_B" and "robot_D". Here, for example, even in the case of an inspection in which the movement place is the ground, a robot whose movement place is in midair may be used. Since the area in which the inspection work of "patrol inspection_01" is performed is an area in which explosion prevention is unnecessary, the robot that performs the inspection work of the patrol inspection_01 does not need to be explosion-proof. Therefore, the processor selects "robot_B" in the robot information 12B as the robot that performs the inspection work of the patrol inspection_01. The processor knows from the robot information 12B that the manufacturer and the model of "robot_B" selected as the robot that performs the inspection work of the patrol inspection_01 are "XX company" and "XX_01".

The processor 11 transmits the confirmed inspection condition to the IA system 30 (step S115). The IA system 30 generates progress information progress report (PR) illustrated in FIG. 6 on the basis of "patrol inspection_01" which is an inspection name included in the confirmed inspection condition and "meter A", "meter B", and "tank A" which are inspection targets included in the confirmed inspection condition, and stores the generated progress information PR in the IA system 30 (step S120). The progress information PR indicates an inspection name, an inspection target, and a progress state of inspection for each inspection target in association with each other. When the processor 11 selects "robot_B" in the robot information 12B, the inspection work of the patrol inspection_01 has not yet been started, and thus, in the progress information PR, as illustrated in FIG. 6, the progress state for all the inspection targets is blank.

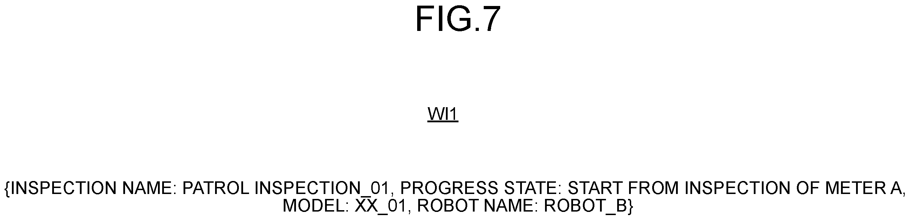

Next, since having selected "robot_B" as the robot that performs the inspection work of the patrol inspection_01, the processor 11 generates work information data WI1 illustrated in FIG. 7 (step S125). The work information data WI1 includes data that the inspection name is "patrol inspection_01", that the progress state of the inspection work "starts from the inspection of the meter A", that the model of the robot performing the inspection work is "XX_01", and that the name of the robot performing the inspection work is "robot_B". The processor 11 transmits the generated work information data WI1 to the robot adapter master 16.

The robot adapter master 16 knows that the model indicated in the received work information data WI1 is "XX_01", and transmits the work information data WI1 to the robot adapter 17 dedicated to the model of "XX_01" among the first robot adapter 17-1 to the M-th robot adapter 17-M. Hereinafter, among the first robot adapter 17-1 to the M-th robot adapter 17-M, the first robot adapter 17-1 is assumed to be the robot adapter 17 dedicated to the model of "XX _01". In the following description, it is assumed that the first robot 20-1 among the first robot 20-1 to the N-th robot 20-N is the robot_B.

The first robot adapter 17-1 converts the received work information data WI1 into a command in a specific format usable for the robot of the model of "XX_01" (step S130), and transmits the converted command to the first robot 20-1 (step S135).

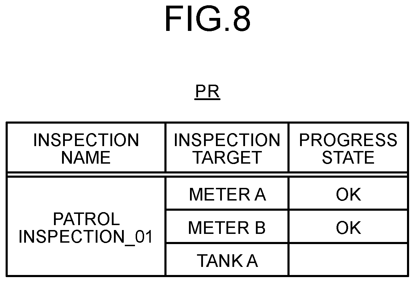

The first robot 20-1 that has received the converted command from the first robot adapter 17-1 sequentially inspects the meter A, the meter B, and the tank A (step S140). The first robot 20-1 transmits the progress state of the inspection work as robot current state data to the management server 10 at a constant cycle (step S145). In the management server 10, the processor 11 receives the robot current state data including the progress state of the inspection work, and the processor 11 reports the progress state of the inspection work to the IA system 30 by transmitting the received robot current state data to the IA system 30 (step S150). The IA system 30 updates the progress information PR on the basis of the robot current state data including the progress state of the inspection work (step S155). For example, when the first robot 20-1 completes inspection of "meter A" and "meter B" among "meter A", "meter B", and "tank A", which are inspection targets in the inspection work of "patrol inspection_01", the progress state in the progress information PR is updated as illustrated in FIG. 8.

It is assumed here that the first robot 20-1 has a trouble after completion of the inspection of "meter A" and "meter B" and before completion of the inspection of "tank A", and interrupts the inspection work of the patrol inspection_01 (step S160). When the inspection work of the patrol inspection_01 is to be interrupted, the first robot 20-1 transmits robot current state data (which may be hereinafter referred to as "work interruption data") indicating that the inspection work of the patrol inspection_01 is interrupted to the management server 10 (step S165). In the management server 10, the processor 11 receives the work interruption data.

Upon receiving the work interruption data, the processor 11 inquires of the IA system 30 about the progress state of the inspection work of the patrol inspection_01 (step S170). The IA system 30 transmits the progress information PR (FIG. 8) to the processor 11 in response to the inquiry from the processor 11 (step S175).

On the basis of the progress information PR (FIG. 8) received from the IA system 30, the processor 11 selects a robot as a transfer destination (which may be hereinafter referred to as "transfer destination robot") of the interrupted inspection work in the robot information 12B in order to know that the inspection work of the patrol inspection_01 is interrupted after completion of the inspection of "meter A" and "meter B" and before completion of the inspection of "tank A". Here, by referring to the inspection information 12A, the processor 11 confirms the inspection condition that the equipment necessary for performing the inspection of "tank A" is "thermo camera", the movement place in the inspection of "tank A" is "ground", and the area in which the inspection of "tank A" is performed is an area in which explosion prevention is unnecessary (step S180).

Next, by referring to the robot information 12B on the basis of the confirmed inspection condition about the tank A, the processor 11 selecting a robot that satisfies the confirmed inspection condition from among the robots other than the robot_B in the robot information 12B. In the robot information 12B, in addition to the robot_B, the robot that has "thermo camera" as a mounting equipment, is "capable" as to whether capable or incapable of working, and can move on the ground is "robot_D". Therefore, the processor selects "robot_D" in the robot information 12B as the transfer destination robot of the inspection work of the patrol inspection_01 (step S185). The processor knows from the robot information 12B that the manufacturer and the model of "robot_D" selected as the transfer destination robot of the inspection work of the patrol inspection_01 are "YY company" and "YY_02".

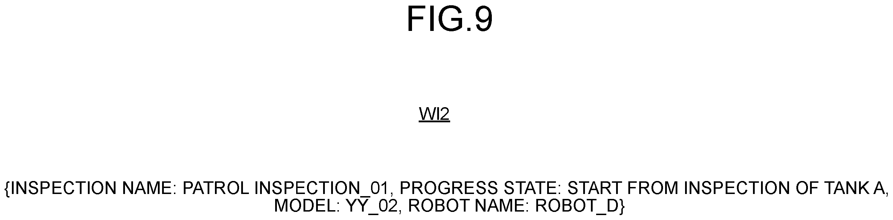

Next, since having selected "robot_D" as the transfer destination robot of the inspection work of the patrol inspection _01, the processor 11 generates work information data WI2 illustrated in FIG. 9 (step S190). The work information data WI2 includes data that the inspection name is "patrol inspection_01 ", that the progress state of the inspection work "starts from the inspection of the tank A", that the model of the robot performing the inspection work is "YY_02", and that the name of the robot performing the inspection work is "robot_D". The processor 11 transmits the generated work information data WI2 to the robot adapter master 16.

The robot adapter master 16 knows that the model indicated in the received work information data WI2 is "YY_02", and transmits the work information data WI2 to the robot adapter 17 dedicated to the model of "YY_02" among the first robot adapter 17-1 to the M-th robot adapter 17-M. Hereinafter, among the first robot adapter 17-1 to the M-th robot adapter 17-M, the second robot adapter 17-2 is assumed to be the robot adapter 17 dedicated to the model of "YY_02". In the following description, it is assumed that the first robot 20-1 among the second robot 20-2 to the N-th robot 20-N is the robot_D.

The second robot adapter 17-2 converts the received work information data WI2 into a command in a specific format usable for the robot of the model of "YY_02" (step S195), and transmits the converted command to the second robot 20-2 (step S200).

The second robot 20-2 that has received the converted command from the second robot adapter 17-2 inspects the tank A (step S205).

Thereafter, similarly to the case where the robot 20 that performs the inspection work is the first robot 20-1, the second robot 20-2 transmits the progress state of the inspection work as the robot current state data to the management server 10 at a constant cycle. In the management server 10, the processor 11 receives the robot current state data including the progress state of the inspection work, and the processor 11 transmits the received robot current state data to the IA system 30. The IA system 30 updates the progress information PR on the basis of the robot current state data including the progress state of the inspection work.

The first embodiment has been described above.

### Second embodiment

The processor 11 can also select a worker to perform the inspection work instead of the robot 20 as a transfer destination of the interrupted inspection work. In addition, the transfer of the inspection work can be performed on the basis of an instruction from an operator instead of occurrence of a trouble in the robot 20. Conversely, the first half of the inspection work may be performed by the worker, and the second half may be transferred to the robot 20.

The second embodiment has been described above.

As described above, the management server (the management server 10 according to the embodiment) of the present disclosure includes an adapter (the robot adapter module 13 of the embodiment), and manages a plurality of robots (the first robot 20-1, second robot 20-2,..., and N-th robot 20-N of the embodiment) having different models. The adapter converts the work information data of the inspection work into a command in a specific format corresponding to each model of the plurality of robots, and transmits the converted command to the robot that performs the inspection work among the plurality of robots.

In this manner, even when there is a difference in model among the plurality of robots capable of performing the inspection work, a command corresponding to each model can be unitarily transmitted from the management server to the robot performing the inspection work. Therefore, the inspection work can be easily transferred between the plurality of robots having different models.

The present disclosure facilitates easy transfer of inspection work between a plurality of robots having different models.

The following are some examples of a combination of the techniques according to the present disclosure.
(1) A management server that manages a plurality of robots including robots having models different from each other, the management server comprising an adapter that converts work information data of inspection work into a command in a specific format corresponding to each of the models of the plurality of robots, and transmits the command after conversion into the specific format corresponding to the model of the robot that performs the inspection work to the robot that performs the inspection work among the plurality of robots.
(2) The management server according to (1), wherein the work information data includes an inspection name of the inspection work, a progress state of the inspection work, the model of the robot that performs the inspection work, and a name of the robot that performs the inspection work, and the adapter converts the work information data into the command in the specific format on a basis of the model indicated in the work information data.
(3) The management server according to (1) or (2), further comprising a processor that selects, from among the plurality of robots, a single robot satisfying a condition of the inspection work in a plant and generates the work information data for the single robot selected.
(4) The management server according to (3), wherein the processor selects the single robot by including an equipment necessary for inspection of an inspection target and a movement place at a time of the inspection work in the condition.
(5) The management server according to (4), further comprising a storage unit that stores inspection information in which the inspection target, the equipment necessary, and the movement place are set in association with each other, wherein the processor selects the single robot by using the inspection information.
(6) The management server according to any one of (3) to (5), further comprising a storage unit that stores robot information in which each of the models of the plurality of robots, each movement type of the plurality of robots, and a mounting equipment of each of the plurality of robots are set in association with each other, wherein the processor selects the single robot by using the robot information.
(7) The management server according to any one of (3) to (6), wherein when the inspection work by the single robot is interrupted, the processor selects a transfer destination robot of the inspection work from among the plurality of robots on a basis of the condition according to a progress state of the inspection work.
(8) The management server according to any one of (3) to (7), wherein the processor reports a progress state of the inspection work to an IA system that instructs the management server to perform the inspection work.
(9) A robot management system comprising: a plurality of robots including robots having models different from each other; and a management server including an adapter that converts work information data of inspection work into a command in a specific format corresponding to each of the models of the plurality of robots, and transmits the command after conversion into the specific format corresponding to the model of the robot that performs the inspection work to the robot that performs the inspection work among the plurality of robots.
(10) A robot management method of managing a plurality of robots including robots having models different from each other, the method comprising: by an adapter included in a management server that is communicable with the plurality of robots, converting work information data of inspection work into a command in a specific format corresponding to each of the models of the plurality of robots; and transmitting the command after conversion into the specific format corresponding to the model of the robot that performs the inspection work to the robot that performs the inspection work among the plurality of robots.

## Claims

1. A management server (10) that manages a plurality of robots (20-1, 20-2,..., 20-N) including robots having models different from each other, the management server (10) comprising
an adapter (13) that converts work information data of inspection work into a command in a specific format corresponding to each of the models of the plurality of robots (20-1, 20-2,..., 20-N), and transmits the command after conversion into the specific format corresponding to the model of the robot that performs the inspection work to the robot that performs the inspection work among the plurality of robots (20-1, 20-2,..., 20-N).

2. The management server (10) according to claim 1, wherein
the work information data includes an inspection name of the inspection work, a progress state of the inspection work, the model of the robot that performs the inspection work, and a name of the robot that performs the inspection work, and
the adapter (13) converts the work information data into the command in the specific format on a basis of the model indicated in the work information data.

3. The management server (10) according to claim 1, further comprising
a processor (11) that selects, from among the plurality of robots (20-1, 20-2,..., 20-N), a single robot satisfying a condition of the inspection work in a plant and generates the work information data for the single robot selected.

4. The management server (10) according to claim 3, wherein
the processor (11) selects the single robot by including an equipment necessary for inspection of an inspection target and a movement place at a time of the inspection work in the condition.

5. The management server (10) according to claim 4, further comprising
a storage unit (12) that stores inspection information in which the inspection target, the equipment necessary, and the movement place are set in association with each other, wherein
the processor (11) selects the single robot by using the inspection information.

6. The management server (10) according to claim 3, further comprising
a storage unit (12) that stores robot information in which each of the models of the plurality of robots, each movement type of the plurality of robots, and a mounting equipment of each of the plurality of robots are set in association with each other, wherein
the processor (11) selects the single robot by using the robot information.

7. The management server (10) according to claim 3, wherein
when the inspection work by the single robot is interrupted, the processor (11) selects a transfer destination robot of the inspection work from among the plurality of robots (20-1, 20-2,..., 20-N) on a basis of the condition according to a progress state of the inspection work.

8. The management server (10) according to claim 3, wherein
the processor (11) reports a progress state of the inspection work to an IA system (30) that instructs the management server (10) to perform the inspection work.

9. A robot management system (1) comprising:
a plurality of robots (20-1, 20-2,..., 20-N) including robots having models different from each other; and
a management server (10) including an adapter (13) that converts work information data of inspection work into a command in a specific format corresponding to each of the models of the plurality of robots (20-1, 20-2,..., 20-N), and transmits the command after conversion into the specific format corresponding to the model of the robot that performs the inspection work to the robot that performs the inspection work among the plurality of robots (20-1, 20-2,..., 20-N).

10. A robot management method of managing a plurality of robots including robots having models different from each other, the method comprising:
by an adapter included in a management server that is communicable with the plurality of robots,
converting work information data of inspection work into a command in a specific format corresponding to each of the models of the plurality of robots; and
transmitting the command after conversion into the specific format corresponding to the model of the robot that performs the inspection work to the robot that performs the inspection work among the plurality of robots.
